# EUROPEAN PATENT APPLICATION

(11) **EP 4 510 252 A1**
(43) Date of publication of application: **19.02.2025**
(21) Application number: 23191279.1
(22) Date of filing: 14.08.2023
(51) Int. Cl.: H01M 8/04029, B64D 37/32, H01M 8/04007, H01M 8/04082, H01M 8/2484

(54) **HEAT-PROTECTED FUEL CELL PIPES**

(71) Applicant: Airbus Operations GmbH, 21129 Hamburg (DE)
(72) Inventor: Born, Johannes, Hamburg (DE); Elbracht, Dirk, Hamburg (DE)

(57) **Abstract**

The present invention relates to a heat-protecting fuel supply arrangement. In order to provide for lighter fuel cells that are also suitable for adaptions a heat-protecting fuel supply arrangement (10) for a fuel cell (12) is provided. The heat-protecting fuel supply arrangement (10) comprises a manifold (14), being a duct arrangement (16) that comprises at least one fuel supply line (18) and at least one coolant duct (20) and a heat protection shielding (22). The manifold is formed to be mounted to an end connection portion (24) of the fuel cell. The manifold is formed to supply the fuel cell with a fuel (26) via the at least one fuel supply line and to provide cooling (28) at least to the fuel supply line via the at least one coolant duct. The manifold is made from a polymeric material (30). The structural integrity of the manifold is defined by the polymeric material. The heat protection shielding is arranged to protect at least a portion of an outer surface (32) of the at least one fuel supply line against external thermal sources (34) to mitigate thermal changes (36) of the manifold.

## Description

### FIELD OF THE INVENTION

The present invention relates to a measure for improving heat-resistance of fuel cell supplies, more specifically the invention relates to a heat-protecting fuel supply arrangement, to a fuel cell, an energy supply system, to an aircraft and to a method for making a heat-protecting fuel supply arrangement.

### BACKGROUND OF THE INVENTION

Fuel cells that convert chemical to electrical energy may be deployed to empower a wide range of vehicle systems. As an example, fuel cells can be used in aircrafts for various purposes. Fuel such as hydrogen can be stored onboard in designated reservoirs and can be supplied to fuel cells according to their consumption, i.e., demand. In addition to fuel supply, also cooling can be arranged to keep the operation of fuel cells under determined thermal conditions. However, besides space constraints that may require customized arrangements, in particular in the supply arrangement connected to the fuel cells, the weight can also be challenging, for example, in aircrafts.

### SUMMARY OF THE INVENTION

There may thus be a need for lighter arrangements for fuel cells.

The object of the present invention is solved by the subject-matter of the independent claims; further embodiments are incorporated in the dependent claims. It should be noted that the following described aspects of the invention apply also for the heat-protecting fuel supply arrangement, for the fuel cell, for the energy supply system, for the aircraft and for the method for making a heat-protecting fuel supply arrangement.

According to the present invention, a heat-protecting fuel supply arrangement for a fuel cell is provided. The heat-protecting fuel supply arrangement comprises a manifold, being a duct arrangement that comprises at least one fuel supply line and at least one coolant duct and a heat protection shielding. The manifold is formed to be mounted to an end connection portion of the fuel cell. The manifold is formed to supply the fuel cell with a fuel via the at least one fuel supply line and to provide cooling at least to the fuel supply line via the at least one coolant duct. The manifold is made from a polymeric material. The structural integrity of the manifold is defined by the polymeric material. The heat protection shielding is arranged to protect at least a portion of an outer surface of the at least one fuel supply line against external thermal sources to mitigate thermal changes of the manifold.

As an advantage, cost efficient polymers are used for the manifold.

As an advantage, a better adaptable and adjustable manifold is provided.

As an advantage, a more secure manifold with low weight is provided.

According to an example, the heat protection shielding further comprises a mantle structure. The mantle structure encloses a heat dissipating substance reservoir surrounding an outer surface of at least a part of the at least one fuel supply line. The heat dissipating substance reservoir is configured to receive a substance that mitigates thermal changes affecting the manifold.

According to an example, the mantle structure comprises a pipe-in pipe arrangement where an outer pipe is arranged to follow at least a portion of the at least one fuel supply line in a coaxial manner.

According to an example, for the heat protection shielding, at least a portion of the least one fuel supply line runs inside the at least one coolant duct. The heat protection shielding is configured to mitigate thermal changes of the manifold through the at least one coolant duct with a flow of coolant.

According to the present invention, also a fuel cell unit is provided. The fuel cell unit comprises at least one fuel cell and a heat-protecting fuel supply arrangement according to one of the previous examples. The heat-protecting fuel supply arrangement is mounted to an end connection portion of the fuel cell. The at least one fuel cell is supplied with fuel by the least one fuel supply line.

As an advantage, a lighter and more space saving fuel cell unit is provided.

As an advantage, a better adaptable and adjustable fuel cell is provided.

According to the present invention, also an energy supply system is provided. The energy supply system comprises at least one fuel cell unit according to one of the previous examples and a fuel reservoir. The fuel reservoir is connected to the at least one fuel cell via the at least one fuel supply line of the heat-protecting fuel supply arrangement. The at least one fuel cell is configured to provide electric energy to power consuming loads.

As an advantage, a lighter and more space saving energy supply system is provided.

According to the present invention, also an aircraft is provided. The aircraft comprises at least one energy supply system according to the previous example and at least one power consuming load. The least one power consuming load comprises at least one of the group of: a propulsion system, electric avionic equipment and onboard electric devices for a cabin area. The least one power consuming load is powered by the at least one energy supply system.

As an advantage, safety and weight of an aircraft are improved.

According to the present invention, also a method for making a heat-protecting fuel supply arrangement is provided. The method comprising the following steps:
- Providing a fuel cell,
- Providing a manifold, as a duct arrangement, having at least one fuel supply line and at least one coolant duct,
- Forming the manifold from a polymeric material, to supply the fuel cell with fuel via the at least one fuel supply line and to provide cooling at least to the fuel supply line via the at least one coolant duct,
- Providing a heat protection shielding, and
- Arranging the heat protection shielding to protect at least a portion of an outer surface of the at least one fuel supply line against external thermal sources to mitigate thermal changes of the manifold.

According to an example of the method, the heat-protecting fuel supply arrangement is made by additive manufacturing.

According to an aspect, a supply structure for a fuel cell is made from a light material to save weight and to have more adjustability with respect to producing and mounting of the piping and the fuel cell. As an example, the material is lighter than metal like steel, aluminum or alloys commonly used for fluid supply for fuel cells. The light material structure is easier degradable by heat than metal. To compensate for this lower heat resisting characteristic, a protection measure is applied to the light material structure in order to delay its degradation with respect to heat. The protection measure insulates the light material structure from heat, removes heat from the light material structure and extinguishes the heat sources.

According to an aspect, designs to enable a self-extinguishing hydrogen manifold to overcome the fast spread and critical burn of hydrogen are provided.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 shows a general scheme of a cross section through an example of a heat-protecting fuel supply arrangement.
Fig. 2 schematically shows a cross section through a mantle structure of the heat-protecting fuel supply arrangement.
Fig. 3 schematically shows a cross section through a mantle structure configured to encapsulate other functional units of the manifold and/or the fuel cell.
Fig. 4 schematically shows a cross section through a mantle structure comprising a pipe-in pipe arrangement and where at least a portion of at least one fuel supply line runs inside at least one coolant duct.
Fig. 5 shows an example of a fuel cell unit and an energy supply system.
Fig. 6 shows an aircraft comprising the energy supply system.
Fig. 7 shows basic steps of an example of a method for making a heat-protecting fuel supply arrangement.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

In an example, hydrogen fuel cells need to be supplied with different media like hydrogen, cooling agent and oxygen. Attached directly to the so-called fuel cell stack of the fuel cell, there is a manifold routing these media to the stack inlets. As an example, in order to fulfill requirements regarding minimum installation space and weight in vehicles, these manifolds can be provided as rather geometrically complex structures. The manifolds can be manufactured by additive manufacturing, by Polymer SLS or Metal SLS, welded pipes, or injection molding with polymeric materials. In case of polymeric manifolds, the resistance against thermal heat of hydrogen is of certain interest, as thermoplastic polymers have normally melting temperature significantly lower than the hydrogen flame temperature. In the following, also further concepts are discussed and developed to prevent the system from melting.

In an example, a variant hydrogen and coolant manifold is designed in such a way that, if a hydrogen fire occurs in the pipe, it will extinguish itself. This shall happen without an active fire extinguishing process/step or device. Different variants are proposed, both going back to a basic principle - a pipe-in-pipe design.

In an example, a variant routes the hydrogen manifold, here also called H2-pipe, through the coolant manifold, here also called coolant pipe. If a fire breaks out inside the hydrogen pipe, the pipe wall will collapse, very rapidly depending on the material and open up a connection to the outer coolant pipe. The coolant fluid will then extinguish the hydrogen fire and flood the pipe. A quick shut valve needs to be implemented to protect the fuel cell from being flooded with cooling agents.

In an example, another variant routes the H2 pipe through a second larger pipe leading to a cavity between both pipes. The cavity is being filled with a fire extinguishing lightweight powder/granulate. Once the hydrogen pipe collapses due to fire from the inside, the powder will flood the pipe and extinguish the fire. If a fire comes from the outside, the powder directly protects the inner pipe from fire and acts as a barrier.

In an example, another variant encapsulates the entire manifold by another shell element that is manufactured in-situ with the pipework. The resulting space in between the encapsulating shell and the pipes can be flooded/filled with a media that has fire extinguishing properties, e.g., coolant liquid, powder, etc.

In an example, another variant coats the manifold and especially the critical H2 line internally and externally with a fire protection coating. That is a coating/paint that chemically foams up when exposed to a flame. This way it dissipates the energy and extinguishes the fire. Coatings are a state of technology especially in building construction.

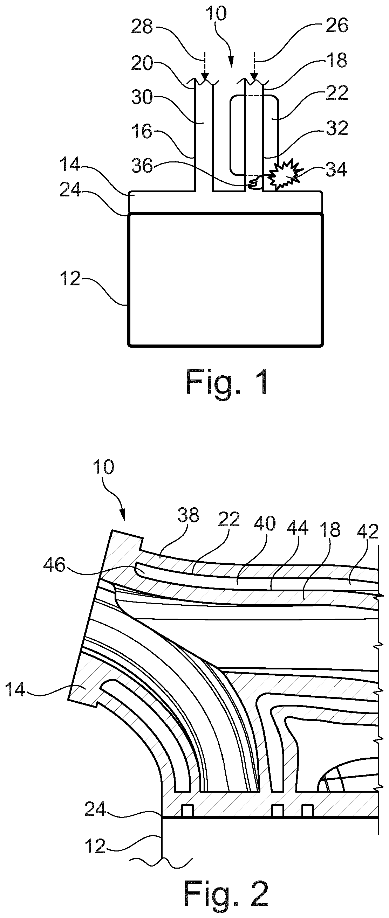

Fig. 1 schematically shows a heat-protecting fuel supply arrangement 10 for a fuel cell 12. The heat-protecting fuel supply arrangement 10 comprises a manifold 14 being a duct arrangement 16 that comprises at least one fuel supply line 18 and at least one coolant duct 20 and a heat protection shielding 22. The manifold 14 is formed to be mounted to an end connection portion 24 of the fuel cell 12. The manifold 14 is formed to supply the fuel cell 12 with a fuel 26 via the at least one fuel supply line 18 and to provide cooling 28 at least to the fuel supply line 18 via the at least one coolant duct 20. The manifold 14 is made from a polymeric material 30. The structural integrity of the manifold 14 is defined by the polymeric material 30. The heat protection shielding 22 is arranged to protect at least a portion of an outer surface 32 of the at least one fuel supply line 18 against external thermal sources 34 to mitigate thermal changes 36 of the manifold 14.

The term "heat-protecting fuel supply arrangement" relates to a piping system from a polymer with protection against heat.

The "heat-protecting fuel supply arrangement" can also be referred to as heat-resistant tubing system or supply arrangement or fire-protected fuel supply arrangement.

The term "fuel cell" relates to a unity that converts chemical energy into electric energy using a reducing and oxidizing substance.

In an example, the fuel cell 12 in Fig. 1 is configured to convert the chemical energy of hydrogen to electricity.

In an example, the fuel cell 12 is configured to convert the chemical energy of molecular hydrogen to electricity.

In an example, the fuel cell 12 is configured to convert the chemical energy of molecular ammonia to electricity.

In an example, the fuel cell 12 is configured to convert the chemical energy of a hydrocarbon to electricity.

In an example, the fuel cell 12 is configured to convert the chemical energy of methane to electricity.

In an example, the fuel cell 12 is configured to convert the chemical energy of methanol to electricity.

The term "manifold" relates to a piping or a tubing system that resembles a structural organization of supply pipes for supplying an operation of the fuel cell 12 in Fig. 1. It comprises pipes for fuel, for oxidant, for exhaust gases or pipes for coolant.

The term "duct arrangement" relates to a piping or tubing system.

The term "fuel supply line" relates to any entity enclosing a lumen, wherein the lumen serves for a restricted and directed transport of gases and/ or liquids separate from the outer environment of the "fluid supply line".

The "fuel supply line" can also be referred to as fuel supply, fuel supply conduit, fuel conduit or supply conduit.

In an example, the term "supply" also refers to a property of the conduits in insulating gases and/ or liquids from the outer environment.

The term "coolant duct" relates to supplies of a cooling system of the fuel cell 12 in Fig. 1 that control the operating temperature of the fuel cell 12, respectively the electrochemical reaction, through a coolant medium or a cooling fluid. The operating temperature is controlled by the temperature of the coolant or cooling fluid or their flow rate.

In an example, the supply lines or ducts are made from a material, that does not change upon contact with the gases and/ or liquids. Preferably, the supply lines or ducts are made from materials, that do not change upon contact with liquid or pressurized hydrogen, not shown in Fig. 1.

In another example, the supply line or duct walls are made from composite materials.

In example, the supply line or duct walls are made from fiber-polymer composite materials.

In an example, the supply lines or ducts come with varying shapes, thicknesses and gradients of thicknesses of their conduit walls, not shown in Fig. 1.

The term "heat protection shielding" relates to an active insulation from thermal events that is not only capable of insulating the protected supply line from heat but also to actively combat external thermal sources 34, e.g., fires.

The "heat protection shielding" can also be referred to as mantle, shell, sheath, jacket, hull, coat, envelope, cover or extinguishing element.

The term "end connection portion" relates to an area at the fuel cell stack of the fuel cell 12 in Fig. 1that is formed as a fastening area to fasten the manifold 14 and to provide access for the supplies to the fuel cell 12.

The term "fuel" relates to the chemical substances as referred to above that the fuel cell 12 of Fig. 1 exploits for producing electricity.

In an example, the fuel 26 comprises hydrogen.

In an example, the fuel 26 comprises molecular hydrogen.

In an example, the fuel 26 comprises molecular ammonia.

In an example, the fuel 26 comprises a hydrocarbon.

In an example, the fuel 26 comprises methane.

In an example, the fuel 26 comprises methanol.

The term "polymeric material" relates to a substance or a material consisting of macromolecules, composed of many repeating subunits.

In an example, the polymeric material is a composite material.

In an example, the polymeric material comprises reinforcement structures.

In an example, the reinforcement structures comprise at least one of the group comprising: carbon fibers, glass fibers, glass beads, ceramic beads, carbon nano tubes, graphene, fullerenes.

In an example, the polymeric material comprises a reduced carbon material embedded between polymer chains.

In an example, the polymeric material comprises carbon fibres.

In an example, the polymeric material comprises at least one polymer and/or monomer of the group comprising: PEEK, PEKK, PAEK, PPS, PA6, PA66, PA6/66, PPA, PPSU, PEI or combinations thereof.

In an example, the polymeric material 30 in Fig. 1 is a heat resistant polymer.

In an example, the polymeric material 30 is Teflon.

The term "external thermal sources" can be heat in the near of, at the outer surface of, or in the polymeric material 30 in Fig. 1, or even inside the duct arrangement 16. In an example, it is fire in the near of, at the outer surface, or in the fuel cell 12. In an example, it is fire in the surrounding of the fuel cell 12. In an example, it is heat produced by a chemical reaction in the fuel cell 12. In an example, it is heat produced by an electrical or electrochemical reaction. In an example, it is heat produced by a lightning strike. In an example, it is thermal heat generated by frictional forces.

The term "thermal changes" relates to any event or cause, that provides a form of energy capable of altering the structural integrity and/or a physical condition of the manifold 14 in Fig. 1.

In an example, the heat protection shielding 22 is arranged to protect at least a portion of an outer surface 32 of the at least one fuel supply line 18, by enwrapping the at least one portion of the outer surface in Fig. 1, by covering a certain part of the outer surface of the at least one fuel supply line 18 only.

In an example, the heat protection shielding 22 is arranged to protect at least a portion of an outer surface 32 of the at least one fuel supply line 18, by covering the at least a portion of the outer surface of the at least one fuel supply line 18 in Fig. 1.

In an example, the heat protection shielding 22 is arranged to protect at least a portion of an outer surface 32 of the at least one fuel supply line18, by being an integral part of the at least a portion of the outer surface of the at least one fuel supply line 18.

In an example, the heat protection shielding 22 is an integral part of the at least one fuel supply line 18, not shown in Fig. 1.

In an example, the heat protection shielding 22 actively prevents melting of the polymeric material 30 of the manifold 14.

In an example, thermal changes 36 at the manifold 14 are induced by, e.g., a hydrogen flame at temperatures higher than 2000 °C, not shown in Fig. 1. The polymeric material 30 or the plastic of the manifold 14 will melt faster at these temperatures than a manifold 14 made of metal that will, despite of the high melting temperatures of metals, also melt after a while. In order to slow down the process of the polymeric manifold 14 melting, the heat protection shielding 22 dissipates the heat of the hydrogen flame and removes an amount of heating energy from the polymeric material 30 of the manifold 14. The heat protection shielding 22 is able to extinguish the hydrogen flame even.

"Mitigate" can also be referred to as weaken, diminish, reduce, quiet, cool, lessen, extinguish, quench, smother or temper.

In an example, the heat protection shielding increases the melting temperature of the polymeric material 30 in Fig. 1.

Fig. 2 schematically shows a cross section through a mantle structure 38 of the heat-protecting fuel supply arrangement 10. The heat protection shielding 22 comprises the mantle structure 38. The mantle structure 38 encloses a heat dissipating substance 40 reservoir 42 surrounding an outer surface of at least a part 44 of the at least one fuel supply line 18. The heat dissipating substance 40 reservoir 42 is configured to receive a substance 46 that mitigates thermal changes 36, not shown in Fig. 2, affecting the manifold 14.

The term "mantle structure" relates to the outer skin of the heat protection shielding 22, where the heat protection shielding 22 is a double walled device enclosing an inner volume. One wall is represented by the outer surface of at least a part 44 of the at least one fuel supply line 18, the other wall represented by the mantle structure 38 in Fig. 2.

In an example, the mantle structure 38 is made from a flexible material and is expendable.

The term "heat dissipating substance" or also called "substance 46 that mitigates thermal changes" relates to a substance that is capable of removing heat imposed on the manifold 14 shown in Fig. 2. It can also be understood as heat quenching substance or fire inhibiting substance.

The "heat dissipating substance" can also be referred to as heat dissipating material.

In an example, the heat dissipating substance 40 absorbs heat and converts it to a different form of energy.

In an example, the heat dissipating substance 40 removes oxygen in the surrounding of the external thermal sources 34, not shown in Fig. 2.

In an example, the heat dissipating substance 40 is configured to cover a wide area and prevent access of oxygen to the wide area, not shown in Fig. 2.

In an example, the heat dissipating substance 40 is a foaming substance.

In an example, the heat dissipating substance 40 is a thermal insulator.

In an example, the heat dissipating substance 40 is a solid material.

In an example, the heat dissipating substance 40 is a powder.

In an example, the heat dissipating substance 40 is a foam.

In an example, a solid material of the heat dissipating substance 40 foams up when in contact to the thermal event to an insulating foam.

In an example, the heat dissipating substance 40 is a jelly.

In an example, the heat dissipating substance 40 is configured to adhere to a polymer.

In an example, the heat dissipating substance 40 is configured to repel at a polymer.

In an example, the heat dissipating substance 40 is an extinction powder or granulate, not shown in Fig. 2.

In an example, the heat dissipating substance 40 is chemically inert with respect to the manifold 14 and the fuel cell 12.

In an example, the heat dissipating substance 40 enhances the heat capacity of the manifold 14.

In an example, the heat dissipating substance 40 is transformed by heat into a protective insulating material, not shown in Fig. 2.

The term "heat dissipating substance reservoir" relates to an intermediate space between the mantle structure 38 and the outer surface of at least a part 44 of the at least one fuel supply line 18 that is capable of storing the heat dissipating substance, respectively a substance that mitigates thermal changes 36 affecting the manifold 14.

The "heat dissipating substance" can also be referred to as heat quenching substance.

In an example, the "heat dissipating substance reservoir" is internally covered with a protection layer that prevents a reaction of the stored heat dissipating substance 40 and the at least one fuel supply line 18, not shown in Fig. 2.

In an example, heat dissipating substance 40 reservoir 42 is formed as at least one internal channel in the at least one fuel supply line 18, not shown in Fig. 2.

In an example, the mantle structure 38 is also configured to insulate the supply line from the thermal event.

In an example, the mantle structure 38 is also configured to insulate the supply line from external thermal sources 34, not shown in Fig. 2.

In an example, the mantle structure 38 comprises heat dissipating substance.

In an example, the mantle structure 38 is a foil, not shown in Fig. 2.

In an example, the mantle structure 38 is configured to perforate in contact with heat and to release the heat dissipating substance 40 into its surroundings.

In an example, the mantle structure 38 is able to extinguish external thermal sources 34 also in the surroundings of the heat-protecting fuel supply arrangement 10.

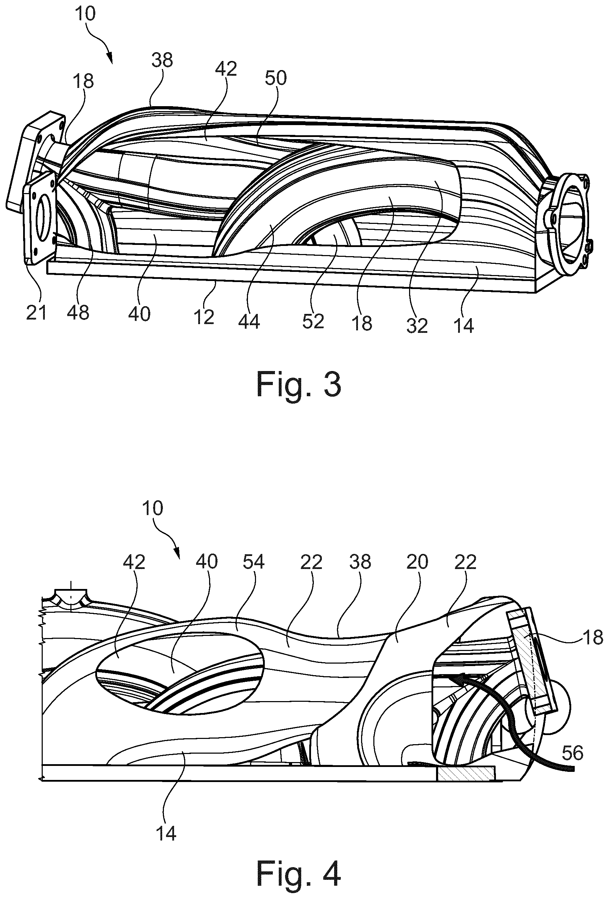

Fig. 3 schematically shows a cross section through a mantle structure 38 configured to encapsulate other functional units 48 of the manifold 14 and/or the fuel cell 12. The heat dissipating substance 40 reservoir 42 exposes its heat dissipating substance 40 at least partly to adjoin to the other functional units 48 of the manifold 14 and/or the fuel cell 12.

In an example, other functional units 48 of the fuel cell 12 can be a connection portion, supplies for exhaust gas, supplies for air, all external or internal faces of the fuel cell 12 and the fuel cell 12 stack, electric terminals and supplies, the surrounding of the fuel cell 12, not shown in Fig. 3.

In an example, the mantle structure 38 forms a chamber enclosing the functional units 48 of the manifold 14 and/or the fuel cell 12.

In an example, the chamber is expendable.

In an example, other functional units 48 of the manifold 14 can also be understood as areas outside the portion of an outer surface 32 of the at least one fuel supply line 18.

As an advantage, a spreading of an external thermal source among other functional units of the manifold and/or the fuel cell is prevented more effectively.

In an example of Fig. 3, the mantle structure 38 is further configured to also encapsulate at least a portion of the at least one coolant duct 20, shown by a coolant duct flange 21 as a part of the at least one coolant duct 20, such that the at least one coolant duct 20 cools the heat dissipating substance 40 reservoir 42.

In an example, the heat dissipating substance 40 reservoir 42 of the mantle structure 38 is supplied with a coolant by the coolant duct flange 21 or comprises the at least one coolant duct 20. A fire beared by the at least one fuel supply line 18 perforates the at least one fuel supply line 18 to provide access either to the coolant in the heat dissipating substance 40 reservoir 42 or even further, perforates the at least one coolant duct 20, shown by the coolant duct flange 21, in order to provide access to the coolant. This manner a fire in the at least one fuel supply line 18 extinguishes itself. Further the whole heat dissipating substance 40 reservoir 42 is cooled down by the coolant.

In an example, during a fire, the at least one coolant duct 20 perforates, and coolant flows in the chamber of the heat dissipating substance 40 reservoir 42, not shown in Fig. 3.

In an example, the solid material foams up when in contact to the thermal event to an insulating foam.

As an advantage, a synergistic effect between the heat dissipating substance and the coolant of the at least one coolant duct is achieved.

In an example of Fig. 3, the heat dissipating substance 40 comprises a fluid 50 and the mantle structure 38 is configured to store the heat dissipating substance 40 comprising the fluid 50 in the heat dissipating substance 40 reservoir 42.

The term "fluid" relates to e. g. a liquid or gas, that continuously deforms, i.e., flows, under an applied shear stress, or external force.

In an example, the fluid 50 removes the heat from external thermal sources 34 by undergoing a phase change, not shown in Fig. 3.

In an example, the fluid 50 is mixed with a solid heat dissipating substance 40.

In an example, the fluid 50 reacts with the solid heat dissipating substance 40 under heat to generate a cooling effect, not shown in Fig. 3.

As an effect, the heat dissipating substance 40 is spread in a wider area of the heat dissipating substance 40 reservoir 42, not shown in Fig. 3.

As an advantage, fluids can be used to extinguish external thermal sources more efficiently.

In an example of Fig. 3, the mantle structure 38 is configured to hold the heat dissipating substance 40 under a pressure 52. The mantle structure 38 is configured to perforate under the pressure 52 when in contact to external thermal sources 34 to provide for a cooling effect with the heat dissipating substance 40 to mitigate thermal changes 36 of the manifold 14.

In an example, the substance under the pressure 52 displaces a large volume containing oxygen around the external thermal sources 34 when expanded to extinguish the external thermal sources 34, not shown in Fig. 3.

In an example, the mantle structure 38 holds the heat dissipating substance 40 under a vacuum.

In an example, the expansion initiates a closure of valves that regulate supply to the fuel cell 12, not shown in Fig. 3.

As an advantage, the expansion of a fluid provides a cooling effect to mitigate thermal changes of the manifold.

As an advantage, the pressure spreads the heat dissipating substance effectively.

Fig. 4 schematically shows a cross section through a mantle structure 38 comprising a pipe-in pipe arrangement 54. The mantle structure 38 comprises the pipe-in pipe arrangement 54 where an outer pipe is arranged to follow at least a portion of the at least one fuel supply line 18 in a coaxial manner.

In an example, a fire from outside is extinguished by perforating the outer pipe and accessing the heat dissipating substance 40.

In an example, a fire from inside the inner pipe is extinguished by perforating the inner pipe and accessing the heat dissipating substance 40, not shown in Fig. 4.

As an effect, a fire in the at least one fuel supply line 18 perforates the at least one fuel supply line 18 and provides itself an access to the heat dissipating substance 40 reservoir 42 in the mantle structure 38.

As an advantage, a fire in the at least one fuel supply line extinguishes itself.

Fig. 4 also schematically shows a cross section through a mantle structure 38 comprising a pipe-in pipe arrangement 54 and where at least a portion of at least one fuel supply line 18 runs inside at least one coolant duct 20. For the heat protection shielding 22, at least a portion of the least one fuel supply line 18 runs inside the at least one coolant duct 20. The heat protection shielding 22 is configured to mitigate thermal changes 36 of the manifold 14 through the at least one coolant duct 20 with a flow of coolant, as shown by arrow 56 in Fig. 4.

In an example, the mantle structure 38 is formed to provide a supply of a flowing coolant from the at least one coolant duct 20 throughout the heat dissipating substance 40 reservoir 42. The mantle structure 38 is configured to mitigate thermal changes 36 of the manifold 14 through the at least one coolant duct 20 with the flowing coolant.

In an example, coolant line in Fig. 4 is rerouted as a coaxial tube design of hydrogen supply and coolant.

In an example, a fire in the at least one fuel supply line 18 will lead to perforation of the at least one fuel supply line 18 and then to immediate extinction of the fire in the at least one fuel supply line 18 or the fuel cell 12, not shown in Fig. 4.

In an example, to prevent the coolant from entering the fuel cell when the at least one fuel supply line 18 is perforated by fire, ventils are provided to stop supply of the coolant.

In an example, the coolant comprises heat dissipating substance 40.

In an example, in case of a fire, the destroyed tube of the hydrogen line let the coolant water flood the hydrogen supply and purge the fire, not shown in Fig. 4.

As an advantage, fuel leaking from the least one fuel supply line or other parts of the manifold is collected in the flow of coolant.

As an effect, the least one fuel supply line running inside the at least one coolant duct, leaves spare space at the original course of the at least one coolant duct.

As an advantage, more spare space is provided at the manifold and the fuel cell.

As an advantage, the control over the operation temperature of the fuel cell is improved.

In an example, not shown in Fig. 4, for the heat protection shielding 22, at least a portion of the least one fuel supply line 18 is provided with a fire protective coating.

In an example, the fire protective coating foams up when in contact to the external thermal event, not shown in Fig. 4.

In an example, the heat dissipating substance 40 is immersed in the polymeric material 30 of the manifold 14, not shown in Fig. 4.

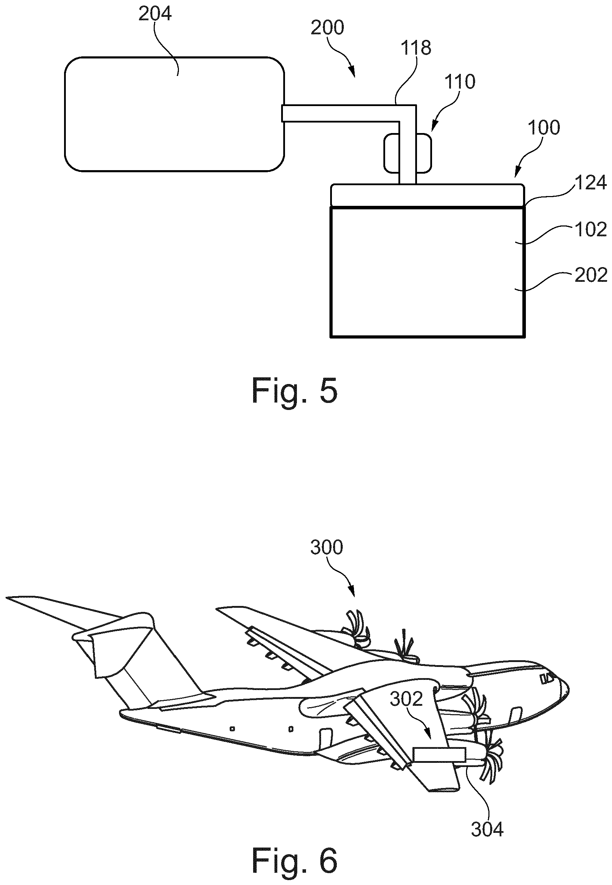

Fig. 5 shows an example of a fuel cell unit 100 and an energy supply system. The fuel cell unit 100 comprises at least one fuel cell 102 and a heat-protecting fuel supply arrangement 110 according to one of the previous examples. The heat-protecting fuel supply arrangement 110 is mounted to an end connection portion 124 of the fuel cell 102. The at least one fuel cell 102 is supplied with fuel by the least one fuel supply line 18.

In an example not shown in Fig. 5, the at least one fuel cell 102 is supplied with cooling by the least one coolant duct 20.

Fig. 5 also shows an example of an energy supply system 200. The energy supply system 200 comprises at least one fuel cell unit 202 according to the previous examples and a fuel reservoir 204. The fuel reservoir 204 is connected to the at least one fuel cell 202 via the at least one fuel supply line 118 of the heat-protecting fuel supply arrangement 110. The at least one fuel cell 202 is configured to provide electric energy to power consuming loads. Fig. 6 shows an aircraft 300 comprising the energy supply system 302. The aircraft 300 comprises at least one energy supply system 302 according to the previous examples and at least one power consuming load 304. The least one power consuming load 304 comprises at least one of the group of: a propulsion system, electric avionic equipment and onboard electric devices for a cabin area. The least one power consuming load 304 is powered by the at least one energy supply system 302.

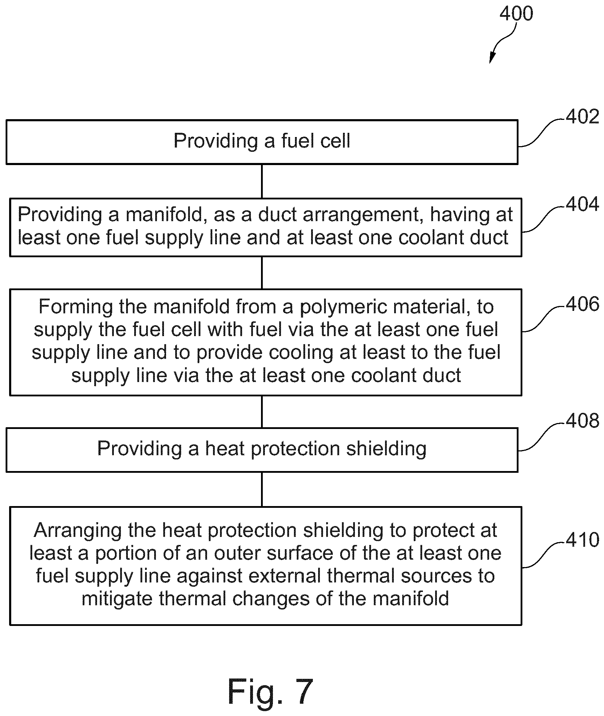

Fig. 7 shows basic steps of an example of a method 400 for making a heat-protecting fuel supply arrangement 10. The method 400 comprises the following steps:
- In a first step 402 a fuel cell 12 is provided.
- In a second step 404 a manifold 14, as shown in Fig. 1, as a duct arrangement 16, having at least one fuel supply line 18 and at least one coolant duct 20 is provided.
- In a third step 406 the manifold 14 is formed from a polymeric material 30, to supply the fuel cell 12 with fuel 26 via the at least one fuel supply line 18 and to provide cooling 28 at least to the fuel supply line 18 via the at least one coolant duct 20.
- In a fourth step 408 a heat protection shielding 22 is provided, and
- In a fifth step 410 the heat protection shielding 22 is arranged to protect at least a portion of an outer surface 32 of the at least one fuel supply line 18 against external thermal sources 34 to mitigate thermal changes 36 of the manifold 14.

In an example, not shown in Fig. 7, a method is provided, comprising the following steps:
- Providing an extinguishing element with an extinguishing agent,
- Providing at least one supply line of the fuel cell 12,
- Attaching the extinguishing element to the at least one supply line of the fuel cell 12,
- Contacting the extinguishing element with a thermal event,
   Releasing an extinguishing agent from the extinguishing element upon the contact to the thermal event, and
   Clearing the thermal event upon releasing the extinguishing agent in order to protect the at least one supply line and the fuel cell 12.

In an example of the method not shown in Fig. 7, the heat-protecting fuel supply arrangement 10 is made by additive manufacturing.

The term "additive manufacturing" relates to a method of 3D printing.

In an example, the heat protection shielding 22 is made by 3D printing during 3D printing of the manifold 14.

As an advantage, additive manufacturing can be used to produce the required complexity.

As an advantage, selective laser sintering can be used to produce the required complexity.

As an advantage, the construction of a more adaptive heat protection shielding at manifolds is possible.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A heat-protecting fuel supply arrangement (10) for a fuel cell (12), comprising:
- a manifold (14), being a duct arrangement (16) that comprises:
- at least one fuel supply line (18); and
- at least one coolant duct (20); and
- a heat protection shielding (22);
wherein the manifold is formed to be mounted to an end connection portion (24) of the fuel cell;
wherein the manifold is formed to supply the fuel cell with a fuel (26) via the at least one fuel supply line and to provide cooling (28) at least to the fuel supply line via the at least one coolant duct;
wherein the manifold is made from a polymeric material (30); wherein the structural integrity of the manifold is defined by the polymeric material; and
wherein the heat protection shielding is arranged to protect at least a portion of an outer surface (32) of the at least one fuel supply line against external thermal sources (34) to mitigate thermal changes (36) of the manifold.

2. Arrangement according to claim 1, wherein the heat protection shielding further comprises a mantle structure (38);
wherein the mantle structure encloses a heat dissipating substance (40) reservoir (42) surrounding an outer surface of at least a part (44) of the at least one fuel supply line; and
wherein the heat dissipating substance reservoir is configured to receive a substance (46) that mitigates thermal changes affecting the manifold.

3. Arrangement according to claim 1 or 2, wherein the mantle structure is further configured to encapsulate other functional units (48) of the manifold and/or the fuel cell; and
wherein the heat dissipating substance reservoir exposes its heat dissipating substance at least partly to adjoin to the other functional units of the manifold and/or the fuel cell.

4. Arrangement according to claim 1, 2 or 3, wherein the mantle structure is further configured to also encapsulate at least a portion of the at least one coolant duct, such that the at least one coolant duct cools the heat dissipating substance reservoir.

5. Arrangement according to one of the preceding claims, wherein the heat dissipating substance comprises a fluid (50); and
wherein the mantle structure is configured to store the heat dissipating substance comprising the fluid in the heat dissipating substance reservoir.

6. Arrangement according to one of the preceding claims, wherein the mantle structure is configured to hold the heat dissipating substance under a pressure (52); and
wherein the mantle structure is configured to perforate under the pressure when in contact to external thermal sources to provide for a cooling effect with the heat dissipating substance to mitigate thermal changes of the manifold.

7. Arrangement according to one of the preceding claims, wherein the mantle structure comprises a pipe-in pipe arrangement (54) where an outer pipe is arranged to follow at least a portion of the at least one fuel supply line in a coaxial manner.

8. Arrangement according to one of the preceding claims, wherein, for the heat protection shielding, at least a portion of the least one fuel supply line runs inside the at least one coolant duct; and
wherein the heat protection shielding is configured to mitigate thermal changes of the manifold through the at least one coolant duct with a flow of coolant.

9. Arrangement according to one of the preceding claims, wherein, for the heat protection shielding, at least a portion of the least one fuel supply line is provided with a fire protective coating.

10. A fuel cell unit (100), comprising:
- at least one fuel cell (102);
- a heat-protecting fuel supply arrangement (110) according to one of claims 1 to 9;
wherein the heat-protecting fuel supply arrangement is mounted to an end connection portion of the fuel cell; and
wherein the at least one fuel cell is supplied with fuel by the least one fuel supply line.

11. Fuel cell unit according to claim 10, wherein the at least one fuel cell is supplied with cooling by the least one coolant duct.

12. An energy supply system (200) comprising:
- at least one fuel cell unit (202) according to claim 10 or 11; and
- a fuel reservoir (204);
wherein the fuel reservoir is connected to the at least one fuel cell via the at least one fuel supply line of the heat-protecting fuel supply arrangement; and
wherein the at least one fuel cell is configured to provide electric energy to power consuming loads.

13. An aircraft (300), comprising:
- at least one energy supply system (302) according to claim 12; and
- at least one power consuming load (304);
wherein the least one power consuming load comprises at least one of the group of: a propulsion system, electric avionic equipment and onboard electric devices for a cabin area; and
wherein the least one power consuming load is powered by the at least one energy supply system.

14. A method (400) for making a heat-protecting fuel supply arrangement, comprising the following steps:
- Providing (402) a fuel cell;
- Providing (404) a manifold, as a duct arrangement, having at least one fuel supply line and at least one coolant duct;
- Forming (406) the manifold from a polymeric material, to supply the fuel cell with fuel via the at least one fuel supply line and to provide cooling at least to the fuel supply line via the at least one coolant duct;
- Providing (408) a heat protection shielding; and
- Arranging (410) the heat protection shielding to protect at least a portion of an outer surface of the at least one fuel supply line against external thermal sources to mitigate thermal changes of the manifold.

15. Method according to claim 14, wherein the heat-protecting fuel supply arrangement is made by additive manufacturing.
